# EUROPEAN PATENT SPECIFICATION

(11) **EP 0 571 689 B1**
(45) Date of publication and mention of the grant of the patent: **16.06.1999**
(21) Application number: 92830261.1
(22) Date of filing: 27.05.1992
(51) Int. Cl.: G06F 1/26, G06F 13/40

(54) **Apparatus for electrical powering of removable units**
Vorrichtung zur elektrische Speisung von abnehmbaren Einheiten
Dispositif pour alimentation électrique d'unités amovibles

(43) Date of publication of application: 01.12.1993
(73) Proprietor: Bull HN Information Systems Italia S.p.A., 20014 Pregnana Milanese (Milano) (IT)
(72) Inventor: Montorfano, Gianpaolo, I-20141 Milano (IT); Cozzi, Daniele, I-20014 Nerviano (MI) (IT)
(74) Representative: Pezzoli, Ennio

(56) References cited:
- EP-A- 0 254 456
- EP-A- 0 345 584
- US-A- 4 079 440
- IBM TECHNICAL DISCLOSURE BULLETIN. vol. 32, no. 9B, February 1990, NEW YORK US pages 424 - 429 , XP00082404 'Hot-Plug Protection Circuit'

## Description

The present invention relates to an apparatus for the electrical powering of removable units (such as for instance disk units) in data processing systems.

In the modern data processing systems the need to use "hot" removable units, that is units insertable and removable during operation of the system, is more and more felt and involves the solution of a plurality of problems.

For instance, in the EP-A-0345584 an apparatus is described which enables the hot removal/insertion of disk units from or to a system bus. The apparatus minimizes the electrical noise induced by the insertion operation in the communication bus, by electrically biasing the signal pins of the unit being connected, previously to its effective powering.

In the cited european application, the powering of the removable unit is performed through switches which are closed only when the unit is effectively inserted in the system.

In this way electrical arching which may damage the coupling connectors, is avoided.

The certainty that the unit is effectively inserted in the system is given by the fact that the electrical coupling switches are integral to the removable unit and are controlled by low power circuits powered by the system.

The actuation of the switches can only be performed if the removable unit is already electrically connected to the system through the connectors.

Electromagnetic lock devices then prevent removal of the unit as long as it is powered, thus preventing electrical arching during removal.

US-A-4,939,806 provides a solution to the above problem with a similar arrangement.

In US-A-4,937,806 the switches which control the powering of the removable unit (in this case FET transistor) are not integral to the removable unit but are fixed parts of the system.

However the control circuits of the switches can be enabled only if an electrical circuit is properly grounded through the removable unit, which must be properly inserted in the system.

Both arrangements however do not solve the problem of noise caused by the sudden load changes caused by the electrical powering of the removable unit and essentially due to the filter and buffer capacitors provided therein.

These capacitors minimize the electrical noise at disconnection but increase the problems at the electrical connection of the removable unit.

These capacitors cause sudden and particularly strong current peaks, when powering, resulting in two kind of inconveniences.

On one side, the current peaks causes a temporary overload, the possible intervention of protection circuits and control errors in the powering voltage.

On the other side sudden voltage spikes are induced in the powering voltages, hence electrical noise which propagates through the whole powering network of the system and may cause misfunctioning.

The present invention overcomes these disadvantages and provides an apparatus for electrically powering removable units, as defined in claim 1, which apparatus prevents overloads, arching at the connections of the removable units and electrical noise of any kind.

According to the invention these results are achieved by control circuits which may be activated only if the removable unit is properly inserted in a related system housing.

The control circuits supply the removable unit with powering voltages which from a null level, gradually increase. The control circuits further operate electromagnetic switches to directly connect the removable unit to the powering voltages only when the removable unit is already powered at a voltage close to the working one.

In this way current peaks and consequent noise as well arching are prevented, both among the connection pins, both among the switch contacts.

Even the troubles caused by chattering, say by the repeated closing and opening of the contacts which occur in the electromagnetic switches are avoided.

The features and the advantages of the invention will appear more clearly from the following description and the related drawings where:
- Figure 1 shows in block diagram the apparatus for electrical powering of the invention.
- Figure 2 shows a circuit diagram of a preferred form of embodiment for the apparatus of figure 1.

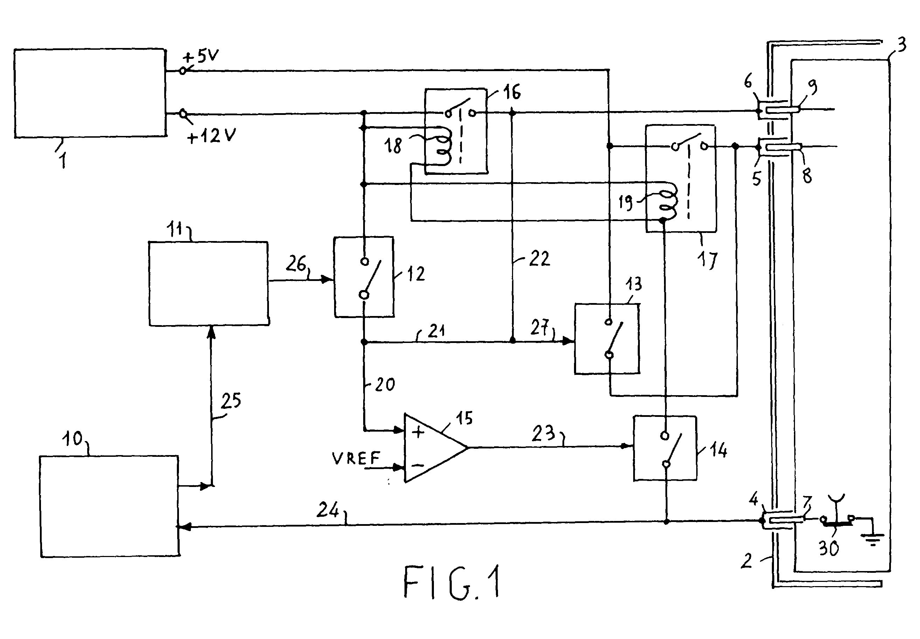

Figure 1 is a block diagram of the apparatus for electrical powering of removable units in accordance with the invention.

The apparatus comprises a system power supply 1, supplying for instance two DC controlled voltages +5V and +12V to the whole system, a housing 2 for receiving a removable unit 3, the housing 2 and the removable unit 3 being respectively provided with socket 4,5,6 and pins 7,8,9 for the electrical connection of the removable unit, a unit 10 for detecting the insertion of the removable unit in the housing, a voltage ramp generator 11, three electronic switches 12,13,14, a voltage comparator 15 and two electromagnetic switches 16,17.

Switch 16, normally open, connects, when energized, the powering voltage source +12V to socket 6 and pin 9 of the removable unit. Switch 17, normally open, connects when energized the powering voltage source +5V to socket and to pin 9 of the removable unit.

Pin 7 of the removable unit is grounded.

The energization windings 18,19 of the electromagnetic switches 16,17 are connected to the voltage source +12V on one side and, through the electronic switch 14, to the socket 4, which is grounded (through pin 7) only when the removable unit is inserted in the housing.

Therefore in order to energize the electromagnetic switches 16,17 two conditions must be met.
- The electronic switch 14 must be closed
- The removable unit must be inserted in the housing.

The electronic switch 14 is controlled by the comparator 15, which has the non inverting input connected to the socket 6 (hence to pin 9 of the removable unit) through leads 20,21,22.

The inverting input of the electronic switch 14 is connected to a reference voltage source VREF (for instance 11V).

When the voltage at socket 6 exceeds the reference voltage VREF the output of the comparator rises at a positive electrical level and supplies a control signal to the electronic switch 14 which is switched on and allows the electromagnetic switches 16,17 to be energized, provided the removable unit is inserted in the housing.

The operation of the apparatus is the following:
When the removable unit 3 is inserted in the housing 2, the insertion detection unit 10 receives, a signal at electrical level 0, through lead 24, from socket 4.

This signal indicates that the removable unit is inserted. The detection unit 10 then triggers, through lead 25, the voltage ramp generator 11 which outputs on lead 26 a signal gradually changing from a first electrical level to a second one, for instance from 0V to 12V.

The electronic switch 12, controlled by this signal, becomes gradually conductive and connects the voltage source +12V to the socket 6 applying to it and to the related load a gradually increasing voltage.

The gradually increasing voltage, in output from switch 12, is further input, through leads 21,27, to the control input of the electronic switch 13 and to the non inverting input of comparator 15.

Therefore even the electronic switch 13 becomes gradually conductive and connects, through gradually decreasing internal resistance, the voltage source +5V to the socket 5 thus applying to pin 8 a voltage which gradually increases from 0V to +5V.

The electronic switches 12 and 13 may consist in transistors having emitter follower configuration as to the load constituted by the removable unit, so as to apply to terminals 6 and 5 a voltage which follows the ramp voltage of generator 11 with a good approximation.

By cascade connecting the two electronic switches the further advantage is obtained of having the +5V voltage, normally used for the powering of logical control circuits, fully applied to the removable unit before the powering voltage of +12V, normally used by power circuits and servomechanisms, is fully supplied.

When the voltage at socket 6 reaches a predetermined level, proximate to the nominal voltage of the power supply, the comparator 15 intervences and controls the electromagnetic switches 16,17 to switch on and to connect the feeding voltage sources to sockets 6,5 through a path having substantially zero resistance.

In order to remove the unit it suffices that the detection unit 10 receive a removal signal (obtained for instance by the actuation of a switch 30 in the removable unit, or a push button of an operator panel) thus controlling the reset of the ramp generator 11 and the immediate switching-off of the electronic and electromagnetic swtiches of the apparatus.

It is clear that the power switching off may be obtained in an automatic way, owing to the removal of the unit from its housing.

It is not required, as suggested by the prior art, that pin 7 be shorter than pins 8,9 so that the switching off of the electromagnetic switches 16,17 and the electronic switches 12,13,14 occur before the decoupling of pins 8 and 9 from the corresponding sockets 5 and 6.

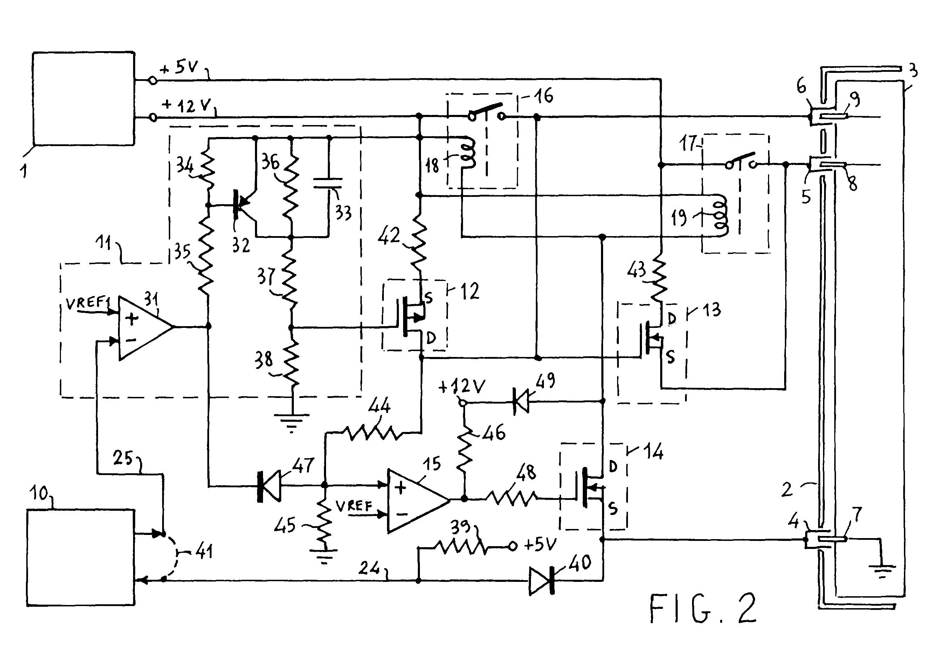

Figure 2 is a circuit diagram of a preferred form of embodiment for the apparatus of the invention.

In Figure 2 the several elements functionally equivalent to those of Fig. 1 are referenced by the same numerals.

In Figure 2 the ramp generator 11 comprises a comparator 31 a PNP transistor 32, a capacitor 33 and biasing resistors 34,35,36,37,88.

The comparator 31 receives a reference voltage VREF1, at the non inverting input and a control or activation signal at the inverting input.

The inverting input is connected, through lead 25, to the output of the insertion detecting unit 10.

Lead 24, which signals to unit 10 the insertion of the removable unit is biased at +5V by resistor 39 and is pulled down to ground, through an isolation diode 40, when the removable unit 3 is inserted in the housing 2.

A strap 41, shown by dotted line and connecting lead 24 to lead 25, may be a substitute for unit 10 and can provide an automatic powering when the removable unit is inserted in the housing.

At rest, comparator 31 receives at the inverting input a positive signal of +5V, higher than the reference voltage VREF1.

The comparator output is therefore at zero level or virtually ground shorted.

The comparator output is connected to the voltage source +12V through resistors 34,35 series connected.

The node intermediate to the two resistors 34,35 is connected to the base of transistor 32, whose emitter is connected to the +12V source, and whose collector is connected to ground through resistors 37,38, series connected.

A resistor 36 and a capacitor 33 are parallel connected between the voltage source +12V and the collector.

The operation of the ramp generator is very simple.

When the signal on lead 25 is at a positive electrical level (+5V) the output of comparator 31 is at electrical level zero and the node intermediate to resistor 34,35 tends to drop so as to directly bias the base emitter junction of transistor 32.

Transistor 32 is conductive and virtually shorts resistor 36 and capacitor 33 which is discharged.

At the node intermediate to resistor 37,38 a high voltage, proximate to +12V is present (resistor 38 is choosen to have a high value relative to the one of resistor 37).

When the signal on lead 25 drops to zero, the output of comparator 31 is disconnected from ground and its electrical level raises to a value imposed by the external connections, in this case +12V, and transistor 32 is switched off.

The voltage at the collector of transistor 32 drops slowly as capacitor 33 is charged with a time constant which depends on the capacity of capacitor 33 and on the resistance of resistors 36,37,38.

Therefore even the voltage at the node intermediate to resistor 37,38 slowly decreases to a level proximate to zero.

The voltage at the node intermediate to resistor 37,38 is used as control voltage VGS (Voltage between Gate and Source) for the electronic switch 12, consisting in a MOSFET having P type channel and gate connected to the node intermediate to resistor 37,38.

The MOSFET 12 has the source connected to the voltage supply of +12V through a current limiting resistor 42 (or a PCT thermistor) and the drain connected to socket 6 and the pin 9 of the removable unit.

Therefore, as long as the voltage at the node is high the bias voltage VGS is zero and the MOSFET 12 is switched off.

As the voltage at the node decreases, the bias voltage VGS becomes more and more negative and the MOSFET 12 becomes gradually conductive and supplies a gradually increasing voltage to socket 6.

The drain of the MOSFET 12 is connected to the control input of the electronic switch 13, consisting in a MOSFET having N type channel.

The MOSFET 13 has the drain connected to the voltage source +5V, through a current limiting resistor or PCT thermistor 43 and the source connected to socket 5 and pin 8.

Contrarily to the P type MOSFETS, the N type MOSFETS, are conductive when a positive control voltage is applied between gate and source.

They are switched off by a control voltage null or negative.

Therefore the MOSFET 13, normally switched off becomes gradually conductive as the drain voltage of the MOSFET 12 rises and is in a good conductive state (even if not fully conductive) before the voltage at socket 6 reaches +12V.

A fraction of the drain voltage of the MOSFET 12 is input, through the voltage divider formed by resistors 44,45 and connected between drain and ground, to the non inverting input of the comparator 15, having an open collector output biased to +12V a resistor 46.

The output of comparator 15 is connected to the gate of an N channel MOSFET 14.

The drain of MOSFET 14 is connected to a terminal of the energization windings, 18,19 and the source is connected to socket 4 (hence to ground).

As long as the voltage at the drain of the MOSFET 12 does not exceed a threeshold voltage, very close to +12V, the voltage at the non inverting input of comparator 15 is lower than the reference voltage VREF at the inverting input and the output of comparator 15 is grounded.

Therefore the control voltage between gate and source of the MOSFET 14 is null and holds the MOSFET in non conductive state.

As soon as the voltage at the non inverting input of comparator 15 exceeds the reference voltage VREF, the output of comparator 15 rises to +12V (owing to a biasing resistor 46) and the MOSFET 14 is quickly switched on allowing the energization of the electromagnetic switches 16,17.

In order to remove the unit 3 it suffices that the unit 10 raises the electrical level of the control signal on lead 25, or in the alternative, if lead 25 is connected to lead 24, it suffices that the unit 3 be removed from the housing (or the push button 30 be actuated).

The comparator 31 then drops its output to zero and the transistor 32 is quickly driven in conductive state.

This causes the switching off of MOSFET 12 and 13.

The diode 47, connecting the non inverting input of comparator 15 to the output of comparator 31, allows for a fast switching of comparator 15 and the switching off of MOSFET 14.

Consequently the switches 16 and 17 are deenergized and switch off.

A diode 49 connected between the voltage source +12V and the drain of MOSFET 14, provides a path for the demagnetization current of windings 18,19.

## Claims

1. Apparatus for the electrical powering of a removable unit, connected to a data processing system through at least a first(9) a second(8) and a third(7) electrical connection pin, comprising:
- detection means (4,10) for detecting, through the grounding of said third(7) pin by said removable unit, the insertion of said removable unit in the system, said detection means generating an activation signal when said removable unit is inserted in said system,
- first circuit means (11,12,13) for applying, in response to said activation signal, at least a first and second voltage, gradually raising from 0 to a first and a second predetermined level, respectively to said first and second pin,
- a first(16) and a second(17) switch, normally open, actuated by a first(18) and a second(19) energization winding respectively, for connecting a source(1) of at least two voltages of said first and second predetermined levels respectively to said first and second pin,
- second circuit means (14,15) for controlling the energization of said first and second winding (18,19) once said first and second predetermined voltage level has been applied to said first and second terminal,
- said energization windings being powered by a circuit closed through said grounding of said third pin by said removable unit.

2. Apparatus as in claim 1, where said first circuit means comprises a voltage ramp generator (11), a first (12) and a second (13) electronic switch, said first electronic switch being controlled by said voltage ramp.

3. Apparatus as in claim 2 where said second electronic switch is controlled by a signal in output from said first electronic switch.

4. Apparatus as in claim 3 where said first and second electronic switches consist in MOSFET transistors having a channel of P and N type respectively.

## Patentansprüche

1. Vorrichtung zur elektrischen Speisung einer abnehmbaren Einheit, die über zumindest einen ersten (9), einen zweiten (8) und einen dritten (7) elektrischen Verbindungsanschlußstift mit einem Datenverarbeitungssystem verbunden ist, mit folgenden Merkmalen:
- einer Erfassungseinrichtung (4, 10) zum Erfassen durch die Erdung des dritten (7) Anschlußstifts mittels der abnehmbaren Einheit des Einbringens der abnehmbaren Einheit in das System, wobei die Erfassungseinrichtung ein Aktivierungssignal erzeugt, wenn die abnehmbare Einheit in das System eingebracht wird,
- einer ersten Schaltungseinrichtung (11, 12, 13), um ansprechend auf das Aktivierungssignal zumindest eine erste und eine zweite Spannung, die allmählich von Null auf einen ersten und einen zweiten vorbestimmten Pegel ansteigen, an den ersten bzw. den zweiten Anschlußstift anzulegen,
- einem ersten (16) und einem zweiten (17) Schalter, die normalerweise offen sind, die durch eine erste (18) bzw. eine zweite (19) Erregungswindung betätigt werden, um eine Quelle (1) von zumindest zwei Spannungen des ersten bzw. des zweiten vorbestimmten Pegels mit dem ersten und dem zweiten Anschlußstift zu verbinden,
- einer zweiten Schaltungseinrichtung (14, 15) zum Steuern der Erregung der ersten und der zweiten Windung (18, 19), sobald der erste und der zweite vorbestimmte Spannungspegel an den ersten und den zweiten Anschluß angelegt wurden,
- wobei die Erregungswindungen durch eine Schaltung gespeist werden, die durch die Erdung des dritten Anschlußstifts mittels der abnehmbaren Einheit geschlossen wird.

2. Vorrichtung nach Anspruch 1, bei der die erste Schaltungseinrichtung einen Spannungsrampengenerator (11) und einen ersten (12) und einen zweiten (13) elektronischen Schalter aufweist, wobei der erste elektronische Schalter durch die Spannungsrampe gesteuert wird.

3. Vorrichtung nach Anspruch 2, bei der der zweite elektronische Schalter durch ein Signal am Ausgang des ersten elektronischen Schalters gesteuert wird.

4. Vorrichtung nach Anspruch 3, bei der der erste und der zweite elektronische Schalter aus MOSFET-Transistoren mit einem Kanal eines P- bzw. eines N-Typs bestehen.

## Revendications

1. Appareil pour l'alimentation en énergie électrique d'une unité amovible, connectée à un système de traitement de données par au moins des première (9), deuxième (8) et troisième (7) broches de connexion électrique, comportant :
- des moyens de détection (4, 10) destinés à détecter, par l'intermédiaire de la mise à la masse de ladite troisième broche (7) par ladite unité amovible, l'introduction de ladite unité amovible dans le système, lesdits moyens de détection générant un signal d'activation lorsque ladite unité amovible est introduite dans ledit système,
- des premiers moyens (11, 12, 13) de circuit destinés à appliquer, en réponse audit signal d'activation, au moins des première et seconde tensions, s'élevant progressivement de 0 jusqu'à des premier et second niveaux prédéterminés, respectivement, auxdites première et deuxième broches,
- des premier (16) et second (17) interrupteurs, normalement ouverts, actionnés par des premier (18) et second (19) enroulements d'excitation, respectivement, pour connecter une source (1) d'au moins deux tensions desdits premier et second niveaux prédéterminés, respectivement, auxdites première et deuxième broches,
- des seconds moyens (14, 15) de circuit destinés à commander l'excitation desdits premier et second enroulements (18, 19) une fois que lesdits premier et second niveaux de tension prédéterminés ont été appliqués auxdites première et deuxième bornes,
- lesdits enroulements d'excitation étant alimentés en énergie par un circuit fermé par l'intermédiaire de ladite mise à la masse de ladite troisième broche par ladite unité amovible.

2. Appareil selon la revendication 1, dans lequel lesdits premiers moyens de circuit comprennent un générateur (11) de rampe de tension, des premier (12) et second (13) interrupteurs électroniques, ledit premier interrupteur électronique étant commandé par ladite rampe de tension.

3. Appareil selon la revendication 2, dans lequel ledit second interrupteur électronique est commandé par un signal en sortie du premier interrupteur électronique.

4. Appareil selon la revendication 3, où lesdits premier et second interrupteurs électroniques sont constitués de transistors MOSFET ayant un canal des types P et N, respectivement.
